# EUROPEAN PATENT SPECIFICATION

(11) **EP 1 566 562 B1**
(45) Date of publication and mention of the grant of the patent: **14.01.2009**
(21) Application number: 04026764.3
(22) Date of filing: 11.11.2004
(51) Int. Cl.: F16F 9/348

(54) **A hydraulic suspension damper**
Hydraulischer Aufhängungsdämpfer
Amortisseur de suspension hydraulique

(30) Priority: 23.02.2004 GB 0403814; 17.03.2004 GB 0405982
(43) Date of publication of application: 24.08.2005
(73) Proprietor: Delphi Technologies, Inc., Troy, MI 48007 (US)
(72) Inventor: Widla, Waldemar, 31-636 Krakow (PL); Piotrowski, Lukasz, 37-500 Jaroslaw (PL); Knapczyk, Marcin, 31-261 Krakow (PL)
(74) Representative: Denton, Michael John

(56) References cited:
- DE-A1- 3 530 395
- GB-A- 2 124 328
- US-A1- 2002 096 408

## Description

The present invention relates to a hydraulic damper, in particular to a hydraulic damper for the suspension system of a motor vehicle.

Hydraulic suspension dampers typically comprise a tube filled with working liquid, inside of which a slidable piston assembly is placed. The piston assembly is attached to a piston rod led outside the damper through the piston rod guide, and comprises a piston with rebound valve arrangement having a number of flow passages disposed around the piston at radially inner side thereof and compression valve arrangement having a number of flow passages disposed around the piston at radially outer side thereof. The valve arrangements control the flow of working liquid passing through the piston assembly during the rebound and the compression stroke of the damper.

Each valve arrangement usually comprises a stack of resilient disks covering the flow passages of the piston and acting as one way valve deflecting or moving under the pressure of the working liquid to allow flow of fluid. Disks of the compression valve arrangement are typically of larger diameter than disks of the rebound stroke arrangement. Number shape, diameter and thickness of each disk provide an adjustable compression and rebound damping forces.

To achieve a blow-off characteristic of the damper during the rebound stoke, i.e. high digressivity of the damping force for high piston velocities GB 2,314,602 and GB 2,376,514 disclose arrangements where the deflectable disks of the rebound stroke valve are biased to a closed position by a coil spring which engages a nut which is screw threaded to the piston rod and a spring seat which is axially slidable relative to the nut and which engages the deflectable disks.

Document US-2002096408-A, which is considered to be the closest prior art, shows the features of the pre-amble of independent claim 1.

An object of the present invention is to provide a hydraulic suspension damper featuring a high digressivity also during the compression stroke, which is simple and uncomplicated to compose, when compared to previously known arrangements, in particular without any necessity to axially orientate the elements of the piston assembly. Another object of the present invention to provide a hydraulic suspension damper featuring characteristic mentioned above, which enables easy modification of existing dampers constructions, and may cooperate with additional rebound stops commonly placed at the piston rod guide.

In order to accomplish the aforementioned and other objects, a damper of the kind mentioned in the outset, according to the present invention is provided with the compression valve arrangement comprising a stack of resilient deflectable disks placed above the piston and covering the compression flow passages of the piston, a spring, mounted around the spring seat guide between the spring seat and a spring retainer, said spring acting by axially slidable spring seat on said stack of disks to normally close the compression flow passages of the piston. Said stack of disks is held at least on the internal peripheral area thereof by the spring seat. Furthermore the spring seat guide is provided with rebound flow passages linked with the flow passages of the piston.

High digressivity of the proposed construction is achieved by the disk surface increase after the opening point of the disk stack, when spring is compressed. The disk stack is retained by the spring seat. The distance between the spring seat and the spring retainer determines the preload of the spring which in turn determine the damper characteristic. Moreover the rebound flow passages of the spring seat guide allow hydraulic fluid to pass through the compression chamber enabling to use a spring of a large diameter.

Yet another advantage of the proposed design is the possibility to use the spring retainer having a relatively large diameter as an element of an additional rebound stop.

Finally it is possible to easily upgrade existing piston assembly constructions with no need to modify the rebound valve arrangements thereof.

To achieve an even distribution of the load of the spring, the spring is preferably a wave spring. Moreover, by using the wave spring the piston assembly has more compact construction, as the height of the wave spring may be lower comparing to the coil spring of the same characteristic.

Advantageously the inlets of the rebound flow passages of the spring seat guide are surrounded by the spring, so they extend radially, rather than in the axial direction, which is particularly convenient as they are not blocked, while the spring retainer is used as a bumper of the rebound stop.

Preferably the spring seat has an annular groove on its surface abutting the disk stack of the compression valve arrangement, where said stack of disks comprises at least two disks, the diameter of at least one is at least partially smaller than the diameter of the remaining disks.

The groove prevents sticking the disk adjoining the spring seat in its deflected position and eliminates the noise that might appear during its return to the normal undeflected position.

To facilitate assembling the piston assembly, the spring seat guide preferably has an annular channel covering the openings of the rebound flow passages of the piston and extending into flow passages of the spring seat guide.

As the channel extends circumferentially along spring seat guide, there is no need to axially orientate the spring seat guide during assembling of the piston assembly. Moreover, such a construction enables application of existing piston parts.

Alternatively it is convenient to integrate the spring seat guide and the piston with one another.

Moreover it is convenient to integrate the spring retainer and the spring seat guide with one another.

Preferably the damper is a mono-tube damper.

The exemplary embodiments of the present invention are presented below in connection with the attached drawings on which:
Fig. 1 is a schematic cross-sectional view of a hydraulic damper according to the present invention;
Fig. 2 is a cross-sectional view of the first embodiment of the piston assembly;
Fig. 3 and Fig. 4 are respectively a cross- sectional and perspective cross-sectional views of the second embodiment of the piston assembly with the spring detached;
Fig. 5 is a perspective view of the disks stack of the compression valve arrangement;
Fig. 6 is a perspective view of the wave spring of the first and the second embodiment of the piston assembly;
Fig. 7 is a cross-sectional view of the third embodiment of the piston assembly, along the line A-A of Fig. 8;
Fig. 8 a is a top view of the third embodiment of the piston assembly; and

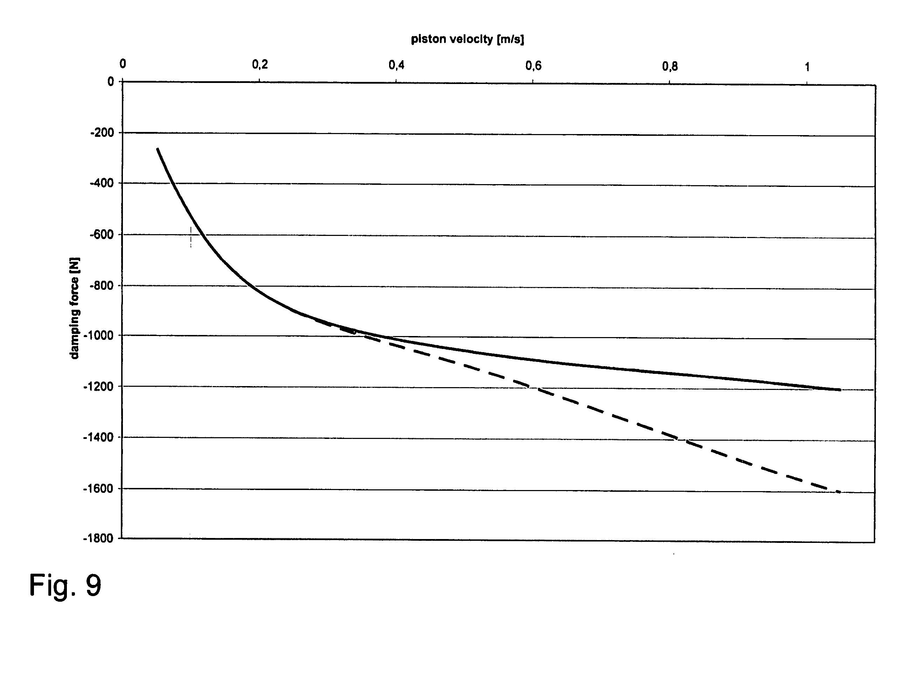

Fig. 9 is a graph of damping force vs. piston velocity during the compression stroke of the damper, for the third embodiment of the piston assembly and for the typical piston.

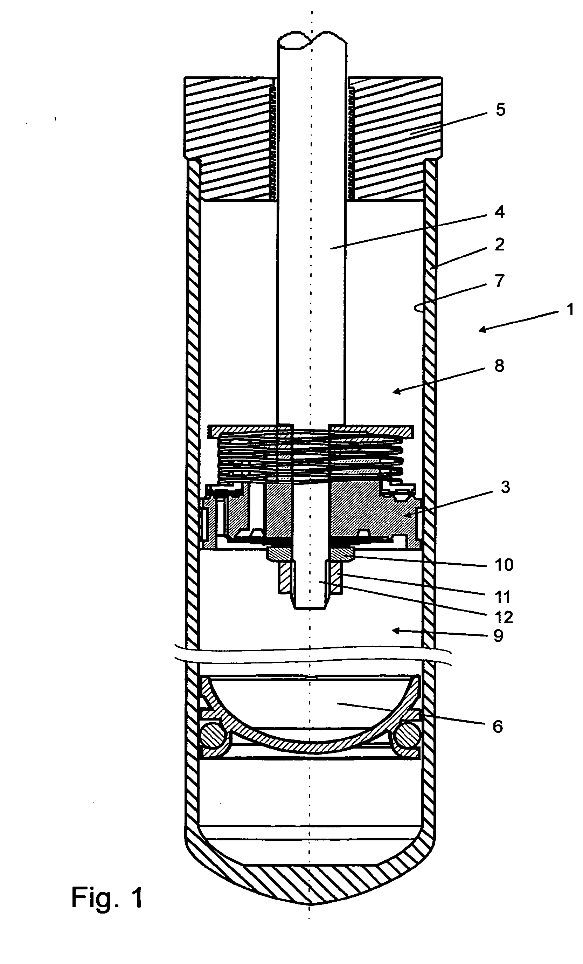

The hydraulic suspension damper 1 shown in Fig. 1 is an example of a mono-tube damper. It comprises a tube 2 filled with working liquid, inside of which a movable piston assembly 3 is placed. The piston assembly is attached to a piston rod 4, led outside the damper 1 through the piston rod guide 5. At the other end, the tube 2 is closed by the compensation valve arrangement 6. The tube 2, the piston rod 4 and the piston rod guide 5 have a typical design known to persons skilled in the art and shall not be described in detail.

The piston assembly 3 makes a sealing sliding fit with the inside surface 7 of the tube 2 and separates the tube 2 into a rebound chamber 8 and compression chamber 9. The piston assembly 3 further comprises a piston having rebound and compression valves with appropriate flow passages, to control flow of working liquid passing through the piston during the rebound and the compression stroke of the damper 1, in order to damp reciprocating movement of the piston and the piston rod along the longitudinal axis of the tube 2. The piston assembly 3 is secured to the piston rod 4 by a washer 10 and a nut 11 screwed on an internal thread of the bolt 12 of the piston rod 4. The hydraulic damper 1 of the above kind is commonly used as a part of a motor vehicle suspension.

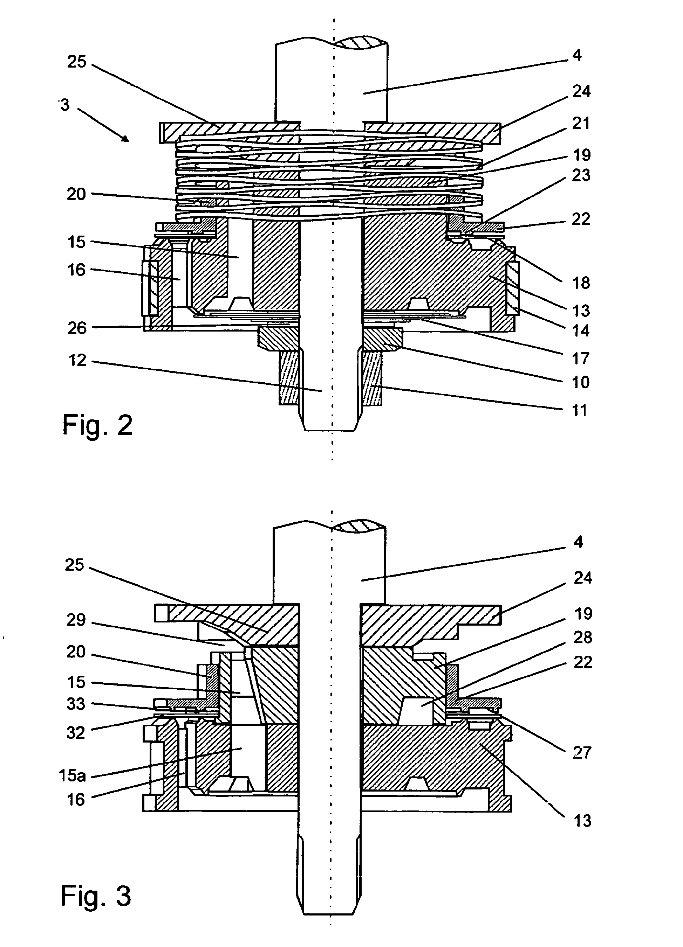

The first embodiment of the piston assembly 3 according to the present invention is shown in Fig. 2. The piston assembly 3 comprises a piston 13, substantially axially symmetrical and provided with an annular sealing 14 (e.g. made from Teflon), forming a sealing with the inner surface 7 of the tube 2. The piston 13 is also provided with a centrally positioned through bore having an inner diameter corresponding to the outer diameter of the bolt 12 of the piston rod 4.

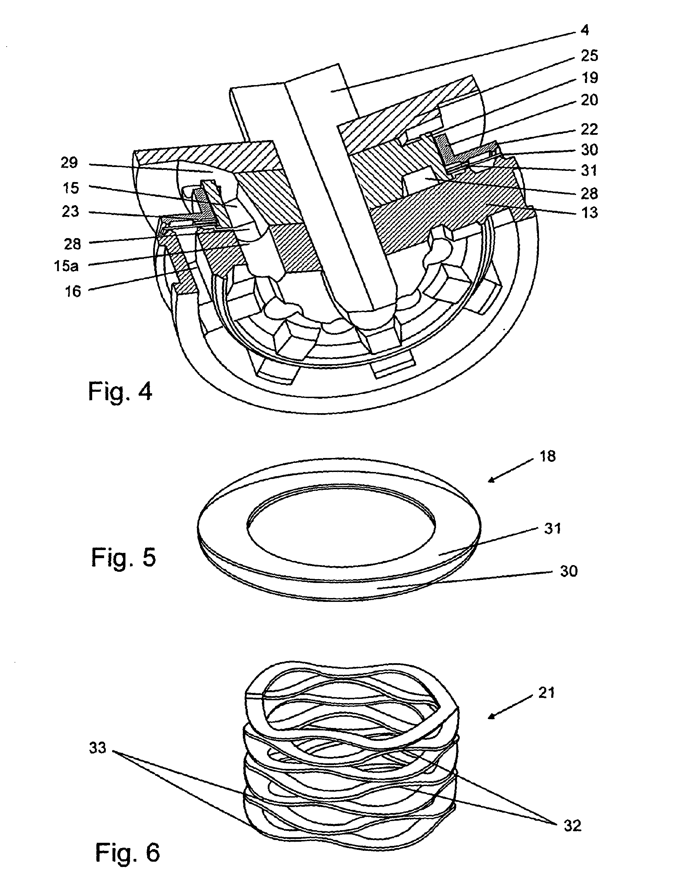

Furthermore the piston 13 is provided with a number of rebound flow passages 15 and a number of compression flow passages 16. Although many different arrangements, designs and constructions of the flow passages are equally possible here, in this embodiment both rebound 15 and compression 16 flow passages are substantially parallel to the longitudinal axis of the tube 2 and equiangulary spaced around the periphery of the piston (cf. Fig. 4), where the circle of the compression flow passages 16 is of larger diameter than the circle of the rebound flow passages 15.

The outlets of the rebound flow passages 15 are closed by the stack 17 of resilient deflectable disks. The disks stack 17 comprises a number of stacked disks (in this embodiment five), each in a form of a thin ring. The number of disks may vary and their shape, design and other features are well known to a person skilled in the art. By way of example one of disks may be provided with a check valve, one of disks may have smaller diameter than the others, the disks may or may not be angularly positioned, etc.

The outlets of the compression flow passages 16 are in turn closed by the similar stack 18 of resilient deflectable disks (in this embodiment two) being a part of a compression valve arrangement. The stack 18 is disposed around a spring seat guide 19, which in this embodiment forms an upper portion of the piston assembly 3, and is held from the other side by a radial flange 22 of a spring seat 20 also disposed around a spring seat guide 19 and slidable relative thereto in axial direction.

The proper choice of the disks stacks 17 and 18, in particular with respect to the flow resistances, essentially contributes to the required characteristics of the hydraulic damper during the rebound stroke.

To enable deflection of the disks under the pressure of the working liquid flowing through the compression flow passages 16 of the piston during the compression stroke, the disks stack is held by the projection 23 of the flange 22 only at the internal opening thereof.

A wave spring 21 is mounted between the upper side of the flange 22 of the spring seat 20 and a flange 24 of a spring retainer 25 attached to the piston rod 4. The spring 21 is preloaded by space washer 26, washer 10 and nut 11 and biases the flange 22 of the spring seat 20, the projection 23 and finally the disks stack 18 to close the compression flow passages 16. The elastic force of the spring 21 may, among others, be adjusted by a varying the distance between the upper face of the flange 22 of the spring seat 20 and the lower face of the flange 24 of the spring retainer 25.

The inlets of the rebound flow passages 15 are surrounded by the spring 21, which enables the spring retainer 25 to operate as a buffer for an additional rebound stop (not shown) of the damper 1, preferably located at the piston rod guide 5.

The piston, the spring seat and the spring retainer are preferably formed from sintered steel.

Other embodiments of the piston assembly according to the present invention are presented below. Reference numerals of the same functional elements correspond to those from Fig. 1.

Fig. 3 and Fig. 4 present another embodiment of the piston assembly according to the present invention, with the spring 21, the washer 10, the nut 11 and the sealing 14 detached for better clarity of the drawing. In this case the spring seat guide 19 is a separate element. Among others, this fact enables easy modification of existing piston assemblies to operate as the piston assembly of the present invention by installing only a few additional elements, such as the spring seat guide 19, the spring seat 20, the spring 21 and the spring retainer 25.

For ease of manufacture of the piston assembly 3 the spring seat guide 19 is further provided with an annular channel 28 covering the inlets of the rebound flow passages 15a of the piston 13. The annular channel 28 further extends in some points into the rebound flow passages 15 of the spring seat guide 19. Thanks to the above it is not required to orientate the spring seat guide 19 in order to align the rebound flow passages 15 of the spring seat guide 19 with the rebound flow passages 15a of the piston 13.

As shown in the drawing, the inlets 29 of the rebound flow passages 15 are disposed in the upper face of the spring seat guide 19 and after mounting the spring 21 between the spring guide 20 and the spring retainer 25 they shall be surrounded by the spring.

In this embodiment the flange 22 of the spring seat 20 is provided with an annular groove 27, which prevents sticking the disks to the spring seat in deflected position and eliminates the noise that might appear during its return to the normal (undeflected) position.

The disks stack 18 of the compression valve arrangement of this embodiment is shown in Fig. 5. The stack comprises of two disks, where the lower disk 30 covers the outlets of the compression passages 16, and the upper disk 31 is substantially elliptical.

The construction of the wave spring 21 employed in the first and the second embodiment of the piston assembly 3 is presented in Fig. 6. In this embodiment, the wave spring 21 is made of a single strip of material such as carbon or stainless steel and formed from a plurality of turns. The ridges 32 and the troughs 33 of adjacent turns are in contact with each other. Obviously other configurations of the wave spring, i.e. stack of single turns with closed by overlap are equally possible. The configuration and properties of the spring are selected in dependence of the required damper characteristics.

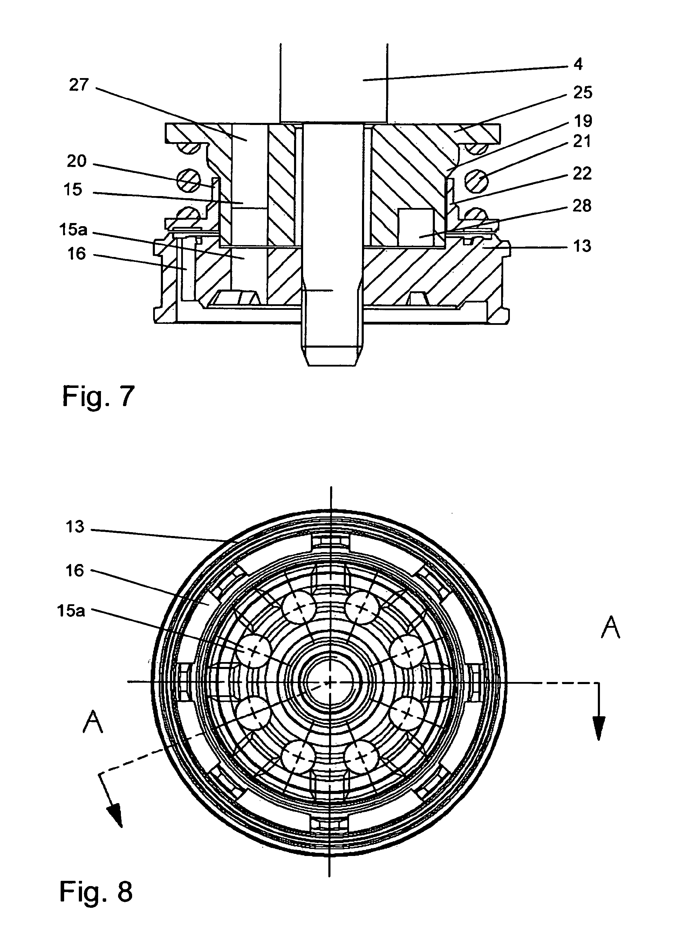

Fig. 7 and Fig. 8 show yet another embodiment of the piston assembly. In this case the spring seat guide 19 and the spring retainer 25 are integrated into one part, preferably made from sintered metal. In this embodiment the spring is a coil spring 21 and the inlets of the rebound flow passages 29 are located on the external surface of the spring retainer 25.

Fig. 8 shows graphs of damping force vs. piston velocity during the compression stroke of the damper for embodiment of the piston assembly shown in Fig. 6 and Fig. 7 (solid line) and for the piston assembly without the spring arrangement (dashed line).

During the compression stroke of the piston assembly, working fluid flows from the compression chamber 9 to the rebound chamber 8 through the compression flow passages 16, pressurising the compression valve disk stack 18 and the flange 22 of the spring seat 20, against the force of the spring 21. When the piston velocity is low the disks deflect allowing the fluid to pass through and the characteristic of the damper correspond to the characteristic of the typical damper without the spring arrangement.

High digressivity (i.e. blow-off characteristic of the damper) is achieved due to an increased opening of the disk stack above the certain speed of the piston, where the pressure of the working fluid exerted on the disk stack 18 exceeds the reaction force of the spring 21. The pressure forces makes the spring seat 22 to slide towards the spring retainer 25, compressing the spring 21 and increasing the flow of the working fluid.

When the damper operates as a part of a vehicle suspension system, the above features are particularly advantageous as the damper exerts small damping forces on the vehicle chassis during driving the vehicle on a regular road, as well as i.e. during curb bump, where the piston velocity in the compression stroke is high. Consequently the blow-off characteristic of the damper essentially contributes to the comfort of using the vehicle.

## Claims

1. A hydraulic damper (1), in particular a motor vehicle suspension damper, comprising a tube (2) filled with working liquid, inside of which a slidable piston assembly (3) attached to a piston rod (4) led outside the damper (1) through the piston rod guide, is placed, said piston assembly (3) having a piston with rebound valve arrangement (17) having a number of flow passages (15) disposed around the piston at radially inner side thereof and compression valve arrangement (18) having a number of flow passages (16) disposed around the piston at radially outer side thereof, said valve arrangements to control the flow of working liquid passing through the piston during the rebound and the compression stroke of the damper (1), wherein the compression valve arrangement comprises a stack (18) of resilient deflectable disks placed above the piston (13) and covering the compression flow passages (16) of the piston (13) and, a spring (21), mounted around the spring seat guide (19) between the spring seat (22) and a spring retainer (25), **characterised in** said spring (21) acting by axially slidable spring seat (22) on said stack (18) of disks to normally close the compression flow passages (16) of the piston (13), where said stack (18) of disks is held at least on the internal peripheral area thereof by the spring seat (22) and that the spring seat guide (19) is provided with rebound flow passages (15) linked with the flow passages (15a) of the piston (13).

2. A hydraulic damper as claimed in claim 1, **characterised in that** the spring (21) is a wave spring.

3. A hydraulic damper as claimed in claim 1 or 2, **characterised in that** the inlets (29) of the rebound flow passages (15) of the spring seat guide (19) are surrounded by the spring (21).

4. A hydraulic damper as claimed in claim 1 or 3, **characterised in that** the spring seat (22) has an annular groove (27) on its surface abutting said stack of disks (18), where said stack of disks (18) comprises at least two disks, the diameter of at least one (31) is at least partially smaller than the diameter of the remaining disks.

5. A hydraulic damper as claimed in claim 4, **characterised in that** said at least one (31) of disks is substantially elliptical.

6. A hydraulic damper as claimed in claim 1 to 5, **characterised in that** the spring seat guide (19) has an annular channel (28) covering the openings of the rebound flow passages (15a) of the piston (13) and extending into flow passages (15) of the spring seat guide (19).

7. A hydraulic damper as claimed in claim 1 to 5, **characterised in that** the spring seat guide (19) and the piston (13) are integrated with one another.

8. A hydraulic damper as claimed in claim 1 to 7, **characterised in that** the spring retainer (25) and the spring seat guide (19) are integrated with one another.

9. A hydraulic damper as claimed in claim 1 to 8, **characterised in that** the damper is a mono-tube damper.

## Patentansprüche

1. Hydraulischer Dämpfer (1), insbesondere Aufhängungsdämpfer für Motorfahrzeuge, einen mit wirkender Flüssigkeit gefüllten Schlauch (2) umfassend, in welchem eine an einer außerhalb des Dämpfers durch eine Pleuelstangenführung geführte Pleuelstange (4) angebrachte verschiebbare Pleuelstangenanordnung (3) platziert wird, und diese Pleuelstangenanordnung (3) einen Pleuel mit Rückfederventilanordnung mit einer Reihe von um die radiale Innenseite des Pleuels angeordneten Flusskanälen (15) sowie eine Kompressionsventilanordnung (18) mit einer Reihe von um die radiale Außenseite des Pleuels angeordneten Flusskanälen (16) aufweist. Dabei regeln die besagten Ventilanordnungen den Fluss der den Pleuel bei Rückfeder- und Kompressionshub des Dämpfers (1) passierenden Flüssigkeit, wobei die Kompressionsventilanordnung einen über dem Pleuel (13) angeordneten, und die Kompressionsflusspassagen (16) des Pleuels (13) bedeckenden Stapel (18) an nachgiebigen ablenkbaren Scheiben, sowie eine um die Federsitzführung (19) zwischen Federsitz (22) und Federhalter (25) montierte Feder (21) umfasst; charakterisiert **dadurch**, dass die Feder (21) durch einen entlang der Achse verschiebbaren Federsitz (22) auf besagten Scheibenstapel (18) wirkt, um gewöhnlich die Kompressionsflusskanäle (16) des Pleuels (13) zu schließen, wobei der Scheibenstapel (18) durch den Federsitz (22) zumindest in dessen internen Peripheriebereich gehalten wird, und die Federsitzführung (19) mit Rückflusskanälen (15) versehen ist, welche mit den Flusskanälen (15a) des Pleuels (13) verbunden sind.

2. Hydraulischer Dämpfer nach Anspruch 1, **dadurch** charakterisiert, dass die Feder (21) eine Wellenfeder ist.

3. Hydraulischer Dämpfer nach Anspruch 1 oder 2, **dadurch** charakterisiert, dass die Zugänge (29) der Rückflusskanäle (15) der Federsitzführung (19) von der Feder (21) umgeben sind.

4. Hydraulischer Dämpfer nach Anspruch 1 oder 3, **dadurch** charakterisiert, dass der Federsitz (22) auf seiner Oberfläche eine an den besagten Scheibenstapel (18) angrenzende ringförmige Rinne (27) aufweist, wobei der Scheibenstapel (18) zumindest zwei Scheiben umfasst, und der Durchmesser zumindest einer davon (31) zumindest teilweise kleiner als der Durchmesser der restlichen Scheiben ist.

5. Hydraulischer Dämpfer nach Anspruch 4, **dadurch** charakterisiert, dass mindestens eine (31) der Scheiben im Wesentlichen elliptisch ist.

6. Hydraulischer Dämpfer gemäß Ansprüchen 1 bis 5, **dadurch** charakterisiert, dass die Federsitzführung (19) eine die Öffnungen der Rückflusskanäle (15a) des Pleuels (13) bedeckende, und sich in die Flusskanäle (15) der Federsitzführung (19) erstreckende ringförmige Rinne (28) aufweist.

7. Hydraulischer Dämpfer gemäß Ansprüchen 1 bis 5, **dadurch** charakterisiert, dass Federsitzführung (19) und Pleuel (13) miteinander integriert sind.

8. Hydraulischer Dämpfer gemäß Ansprüchen 1 bis 7, **dadurch** charakterisiert, dass Federhalter (25) und Federsitzführung (19) miteinander integriert sind.

9. Hydraulischer Dämpfer gemäß Ansprüchen 1 bis 7, **dadurch** charakterisiert, dass der Dämpfer ein Einzelschlauchdämpfer ist.

## Revendications

1. Amortisseur (1) hydraulique, en particulier amortisseur de suspension pour véhicules à moteur, comprenant un tube (2) rempli d'un liquide de travail, à l'intérieur duquel est placé un ensemble à piston coulissant (3) attaché à une tige de piston (4) menée à l'extérieur de l'amortisseur (1) à travers un guide de tige de piston, ledit ensemble à piston (3) ayant un piston avec un agencement à soupapes de rebondissement (17) ayant un certain nombre de passages d'écoulement (15) disposés autour du piston sur le côté radialement intérieur de celui-ci, et un agencement à soupapes de compression (18) ayant un certain nombre de passages d'écoulement (16) disposés autour du piston sur le côté radialement extérieur de celui-ci, lesdits agencements à soupapes étant destinés à commander l'écoulement de liquide de travail qui passe à travers le piston pendant le rebondissement et la course de compression de l'amortisseur (1), dans lequel l'agencement de soupapes de compression comprend un empilement (18) de disques capables de défléchir élastiquement, placé au-dessus du piston (13) et couvrant les passages d'écoulement de compression (16) du piston (13), et un ressort (21) monté autour d'un guide-siège (19) de ressort entre un siège de ressort (22) et un élément de retenue de ressort (25),
**caractérisé en ce que** ledit ressort (21) agit au moyen du siège de ressort (22) axialement coulissant sur ledit empilement (18) de disques pour fermer normalement les passages d'écoulement de compression (16) du piston (13), ledit empilement (18) de disques étant tenu, au moins sur leurs zones périphériques internes, par le siège de ressort (22), et **en ce que** le guide-siège (19) de ressort est pourvu de passages d'écoulement de rebondissement (15) reliés aux passages d'écoulement (15a) du piston (13).

2. Amortisseur hydraulique selon la revendication 1, **caractérisé en ce que** le ressort (21) est un ressort ondulé.

3. Amortisseur hydraulique selon la revendication 1 ou 2, **caractérisé en ce que** les entrées (29) des passages d'écoulement de rebondissement (15) du guide-siège (19) de ressorts sont entourées par le ressort (21).

4. Amortisseur hydraulique selon la revendication 1 ou 3, **caractérisé en ce que** le siège de ressort (22) possède une gorge annulaire (27) sur sa surface en butée avec ledit empilement de disques (18), ledit empilement de disques (18) comprenant au moins deux disques, le diamètre de l'un au moins des disques (31) étant au moins partiellement plus petit que le diamètre des disques restants.

5. Amortisseur hydraulique selon la revendication 4, **caractérisé en ce que** ledit au moins un disque (31) est sensiblement elliptique.

6. Amortisseur hydraulique selon les revendications 1 à 5, **caractérisé en ce que** le guide-siège de ressort (19) comprend un canal annulaire (28) couvrant les ouvertures des passages d'écoulement de rebondissement (15a) du piston (13) et s'étendant jusque dans des passages d'écoulement (15) du guide-siège de ressort (19).

7. Amortisseur hydraulique selon les revendications 1 à 5, **caractérisé en ce que** le guide-siège de ressort (19) et le piston (13) sont intégrés l'un avec l'autre.

8. Amortisseur hydraulique selon les revendications 1 à 7, **caractérisé en ce que** l'élément de retenue de ressort (25) et le guide-siège de ressort (19) sont intégrés l'un avec l'autre.

9. Amortisseur hydraulique selon les revendications 1 à 8, **caractérisé en ce que** l'amortisseur est un amortisseur monotube.
